## Europäisches Patentamt

## European Patent Office

(19)

## Office européen des brevets

(11) Veröffentlichungsnummer: **0 149 002**

**B1**

(12) # EUROPÄISCHE PATENTSCHRIFT

(45) Veröffentlichungstag der Patentschrift:
02.08.89

(51) Int. Cl.⁴: **G 05 B 11/32, F 22 G 5/18**

(21) Anmeldenummer: **84110955.6**

(22) Anmeldetag: **13.09.84**

(54) **Einrichtung zum Regeln einer Verfahrensgrösse eines strömenden Mediums.**

(30) Priorität: **21.12.83 CH 6812/83**

(43) Veröffentlichungstag der Anmeldung:
**24.07.85 Patentblatt 85/30**

(45) Bekanntmachung des Hinweises auf die Patenterteilung:
**02.08.89 Patentblatt 89/31**

(84) Benannte Vertragsstaaten:
**DE FR IT**

(56) Entgegenhaltungen:
**FR-A-1 244 634**
**FR-A-1 274 822**
**US-A-3 205 869**

(73) Patentinhaber: **GEBRÜDER SULZER AKTIENGESELLSCHAFT, Zürcherstrasse 9, CH-8401 Winterthur (CH)**

(72) Erfinder: **Herzog, Rudolf, bei der Kirche, CH- 9555 Tobel (CH)**

(74) Vertreter: **Dipl.- Ing. H. Marsch Dipl.- Ing. K. Sparing Dipl.- Phys.Dr. W.H. Röhl Patentanwälte, Rethelstrasse 123, D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Einrichtung zum Regeln einer Verfahrensgrösse gemäss den Merkmalen des Oberbegriffs des Anspruchs 1.

Es ist eine solche Einrichtung zum Regeln der Austrittstemperatur bekannt, bei der sowohl das erste wie auch das zweite Drosselorgan vom Signal am Ausgang des Vergleichsorgan direkt gesteuert sind. Dadurch sind beide Drosselorgane nach einem feststehenden Gesetz miteinander verknüpft und können nur in gegenseitiger Abhängigkeit betätigt werden. Die Verknüpfungsfunktion ist so gewählt, dass das eine Drosselorgan schliesst und das andere öffnet und umgekehrt, wodurch es möglich wird, bei zueinander entgegengesetzter Strömungsrichtung im Wärmeübertrager und in der Verbindungsleitung die Durchflussmenge durch den Wärmeübertrager für eine bestimmte Last der Regelstrecke konstant zu halten. Ein Nachteil der bekannten Einrichtung ist ihre grosse Trägheit, mit der sie auf Störungen reagiert.

Es ist Aufgabe der Erfindung, die Einrichtung der eingangs genannten Art so zu verbessern, dass sie auf Störungen rascher reagiert.

Diese Aufgabe wird erfindungsgemäss durch die Merkmale des Kennzeichen des Anspruchs 1 gelöst.

Da beide Drosselorgane bei Auftreten einer Störung zunächst von je einem von der ersten Verfahrensgrösse abhängigen Signal und voneinander unabhängig betätigt werden, ist es möglich, das Mischungsverhältnis zwischen kaltem und heissem Medium zu verändern und dann z. B. die den Wärmeuebertrager durchströmende Durchflussmenge als zweite Verfahrensgrösse - eventuell vorübergehend, aber sehr rasch - zu verändern. Dadurch lässt sich eine sehr schnelle Reaktion auf Störungen herbeiführen. Zusätzliche wesentliche Vorteile der Einrichtung nach der Erfindung sind:

- Jedes Drosselorgan wird unabhängig von dem andern optimal, d.h. entsprechend seiner eigenen Charakteristiken, betätigt.
- Die Unabhängigkeit, mit der die beiden Drosselorgane eingesetzt werden können, enthält eine weite regelstrukturmässige Reserve für allfällige Verbesserungen der Regelung.
- Die Inbetriebsetzung der Regelstrecke wird durch die übersichtlicheren Regelverhältnisse wesentlich vereinfacht. Vorallem wird es auf einfache Weise möglich, die Durchflussmenge durch den Wärmeübertrager zu steuern.
- Im häufig vorkommenden Fall, dass Dampf oder Gas als Medium verwendet und die Austrittstemperatur geregelt wird, ergeben sich gegenüber dem Stand der Technik kleinere Abweichungen vom Sollwert der Austrittstemperatur, so dass die höchsten Drücke kleiner werden. Dadurch können Pumpen, Gebläse, Speicherbehälter, Druckregler, Rohrleitungen und andere Bestandteile, in denen das Medium zirkuliert, kleiner bzw. leichter ausgeführt werden, was zu erheblichen Einsparungen führt.

Die Auslegung der Einrichtung nach den Merkmalen des Anspruchs 2 führt zu einem besonders sanften, asymptotischen zeitlichen Verlauf der zu regelnden ersten Verfahrensgrösse ohne abrupte Übergänge.

Die Berücksichtigung einer zweiten Verfahrensgrösse des Mediums durch das Vergleichsorgan gemäss Anspruch 3 bringt eine wesentliche Verbesserung des Zeitverhaltens der Regelung mit sich. Dieses trifft besonders zu, wenn die zweite Verfahrensgrösse die Durchflussmenge im Wärmeübertrager ist, wegen des grossen Einflusses dieser Grösse auf wärmetechnische Prozesse, wie z. B. des Wärmeübergangs.

Die Anordnung eines Druckspeichers in der Mediumzufuhrleitung laut Anspruch 4 hat eine Beruhigung des Mediumstromes in der Regelstrecke zur Folge und verbessert dadurch die Messbedingungen, die Messergebnisse und die Regelgüte sowie die Arbeitsbedingungen für die Drosselorgane.

Wird die Einrichtung nach Anspruch 5 gestaltet, so fliesst das Medium in der Verbindungsleitung in Richtung von der Abfuhr- zur Zufuhrleitung hin. Dadurch ist die Durchflussmenge durch den Wärmeübertrager grösser als die Menge, die der Regelstrecke zuströmt bzw. aus dieser abströmt. Die Empfindlichkeit einer solchen Regelstrecke gegenüber kurzfristigen Änderungen des Wärmeflusses im Wärmeübertrager ist relativ gering, so dass insgesamt ihre guten regeldynamischen Eigenschaften überwiegen. Die mediumseitige Temperaturdifferenz über dem Wärmeübertrager, zum Beispiel, wird infolge des verhältnismässig grossen Mediumflusses relativ klein und reduziert damit die Abweichungen der Austrittstemperaturen.

Bei der Einrichtung nach Anspruch 6 fliesst das Medium in der Verbindungsleitung in Richtung von der Zufuhr zur Abfuhrleitung. Es fliesst daher nur ein Teil der gesamten Mediummenge durch den Wärmeübertrager und infolgedessen wird dieser besonders kompakt in seinen Abmessungen. Diese Ausführungsform führt also zu einer besonders kostengünstigen Einrichtung nach der Erfindung.

Der Druckunterschied zwischen der Zufuhrleitung und der Abfuhrleitung hängt von vielen Faktoren ab, insbesondere von der Art des in der Regelstrecke durchgeführten Verfahrens, d.h. ob ein Gas oder Dampf im Wärmeübertrager erhitzt oder gekühlt wird, von dem geodätischen Höhenunterschied zwischen den beiden Leitungen, von der eventuellen Anwesenheit einer Pumpe oder eines Verdichters in der Regelstrecke und von den Druckverlusten. Der genannte Druckunterschied ist also innerhalb weiter Grenzen beeinflussbar, so dass die Wahl des gemäss den jeweiligen Randbedingungen optimalen Verfahrens in den meisten Anwendungsfällen frei getroffen werden kann.

Zwei Ausführungsbeispiele der Erfindung werden in der folgenden Beschreibung anhand der Zeichnung näher erläutert. Es zeigen:

Fig. 1   eine schematische, schaltungsmässige Darstellung einer Anlage zum Kühlen von erwärmtem Wasser, bei der eine Einrichtung nach der Erfindung vorgesehen ist,

Fig. 2   ebenfalls in schematischer Darstellung eine Anlage zum Aufheizen von Wasser mit einer gegenüber Fig. 1 abgewandelten Einrichtung nach der Erfindung und

Fig. 3   ein Diagramm über je einen charakteristischen zeitlichen Austrittstemperatur-Verlauf nach einer Störung mit und ohne Verwendung der Einrichtungen nach Fig. 1.

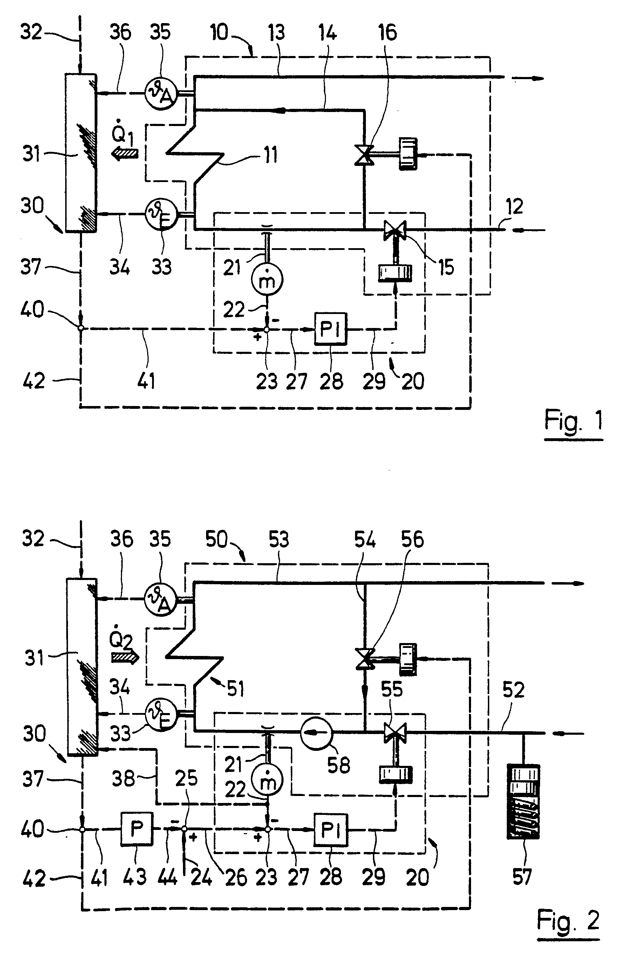

Gemäss Fig. 1 weist die Anlage eine Regelstrecke 10 zum Kühlen von Kühlwasser, einen Regelkreis 20 zum Steuern der die Regelstrecke durchströmenden Wassermenge und eine Einrichtung 30 nach der Erfindung zum Regeln der Austrittstemperatur der Regelstrecke 10 auf.

Die Regelstrecke 10 enthält einen Wärmeübertrager 11, in dem eine Wärmemenge Q1 aus dem durchströmenden Kühlwasser abgeführt wird, zum Beispiel mittels eines nicht näher dargestellten Luftstromes. Weiter enthält die Regelstrecke 10 eine Zufuhrleitung 12 für das Kühlwasser, eine Abfuhrleitung 13 für das Kühlwasser und eine Verbindungsleitung 14, die die Zufuhrleitung 12 mit der Abfuhrleitung 13, parallel zum Wärmeübertrager 11, verbindet. Eine nicht gezeigte Pumpe fördert Kühlwasser durch die Zufuhrleitung 12 in den Wärmeübertrager 11 und von diesem durch die Abfuhrleitung 13 weiter zu einer nicht gezeigten, zu kühlenden Maschine. Stromoberhalb der Abzweigstelle der Verbindungsleitung 14 ist in der Zufuhrleitung 12 ein erstes steuerbares Drosselorgan 1, in Form eines Ventils mit elektromotorischem Antrieb angebracht. Die Verbindungsleitung 14 enthält ein zweites steuerbares Drosselorgan 16, ebenfalls in Form eines Ventils mit elektromotorischem Antrieb.

Im Regelkreis 20 misst ein Durchflussmesser 21 die Wassermenge m, die durch den Wärmeübertrager 11 hindurchfliesst, und überträgt das Messergebnis mittels einer Signalleitung 22 an eine Vergleichsstelle 23, in der das Messignal mit einem Sollwertsignal verglichen wird, das über eine Signalleitung 41 zugeführt wird. Die Differenz der beiden Signale wird über eine Signalleitung 27 an einen PI-Regler 28 weitergeleitet. Das Ausgangssignal des PI-Reglers 28 wirkt über eine Signalleitung 29 auf das Ventil 15 und steuert somit die gesamte Wassermenge, die durch die Regelstrecke 10 fliesst.

Die Einrichtung 30 enthält ein Vergleichsorgan 31, dem über eine Signalleitung 32 ein Sollwertsignal für die Austrittstemperatur $\vartheta_A$ der Regelstrecke 10 zugeführt wird. Zum Messen dieser Temperatur ist ein Temperaturfühler 35 an der Abfuhrleitung 13 vorgesehen, und zwar stromunterhalb der Mündung der Verbindungsleitung 14. Der Temperaturfühler 35 steht über eine Signalleitung 36 mit dem Vergleichsorgan 31 in Verbindung. Ausser der Austrittstemperatur $\vartheta_A$ wird auch die Eintrittstemperatur $\vartheta_E$ mittels eines Temperaturfühlers 33 gemessen, der an der Zufuhrleitung 12 nahe dem Wärmeübertrager 11 angebracht ist. Über eine Signalleitung 34 wird die vom Temperaturfühler 33 gemessene Eintrittstemperatur $\vartheta_E$ dem Vergleichsorgan 31 übermittelt. Von dem Vergleichsorgan führt eine Signalleitung 37 zu einer Verzweigungsstelle 40, von der aus einerseits die das Sollwertsignal für den PI-Regler 28 führende Leitung 41 zur Vergleichsstelle 23 und andererseits eine Signalleitung 42 zum Ventil 16 in der Verbindungsleitung 14 führen.

Im Normalbetrieb der Anlage nach Fig. 1 strömt das Kühlwasser durch die Zufuhrleitung 12, den Wärmeübertrager 11, die Abfuhrleitung 13 sowie die Verbindungsleitung 14. Die Kühlwassermenge in der Zufuhrleitung 12 stromoberhalb der Abzweigung der Verbindungsleitung 14 ist gleich der Kühlwassermenge in der Abfuhrleitung 13 stromunterhalb der Mündung der Verbindungsleitung 14 und jede dieser Mengen ist gleich der Summe der Kühlwassermengen, die durch den Wärmeübertrager 11 und die Verbindungsleitung 14 strömen. Die Kühlwassertemperaturen $\vartheta_E$ und $\vartheta_A$ werden ständig durch den Temperaturfühler 33 bzw. 35 überwacht, während die den Wärmeübertrager 11 durchströmende Kühlwassormenge vom Durchflussmesser 21 überwacht wird, wobei die Einrichtung 30 und der Regelkreis 20 keinen Eingriff auf die Drosselorgane 15 und 16 ausüben, solange keine Störung des Normalbetriebes auftritt. Das Ventil 16 ist dabei so weit geöffnet, dass das Gemisch aus dem durch die Verbindungsleitung 14 fliessenden, ungekühlten Kühlwasser und dem im Wärmeübertrager 11 gekühlten Kühlwasser im Bereich des Temperaturfühlers 35 die gewünschte Austrittstemperatur aufweist.

Tritt in der Anlage nach Fig. 1 eine Störung auf, die sich in einer Erhöhung der Eintrittstemperatur $\vartheta_E$ auswirkt, so meldet der Temperaturfühler 33 diese Erhöhung dem Vergleichsorgan 31. Diese Meldung ändert das Ausgangssignal in der Leitung 37, das einerseits über die Signalleitung 42 einen direkten Eingriff auf das Ventil 16 zur Folge hat, und zwar in schliessendem Sinne; dadurch wird die in der Verbindungsleitung 14 strömende Wassermenge verringert und zugleich die zum Wärmeübertrager 11 strömende Wassermenge vergrössert. Das veränderte Ausgangssignal in der Leitung 37 wirkt ausserdem über die Signalleitung 41 auf die Vergleichsstelle 23, wo es mit dem vom Durchflussmesser 21 kommenden Signal verglichen wird. Das hier entstehende neue Differenzsignal wirkt auf den PI-Regler 28, der das Ventil 15 in öffnendem Sinne beeinflusst, so dass nochmals die zum Wärmeübertrager 11 strömende Wassermenge erhöht wird. Die beiden geschilderten Eingriffe lösen eine sehr grosse Mengenänderung aus, die aber nur kurzzeitig wirksam ist, weil über den, rasch wirkenden Mengenregelkreis 20 ein Teil der Erhöhung der Kühlwassermenge zurückgenommen wird, indem, vom Durchflussmesser 21 ausgehend, über den PI-Regler 28 das Ventil 15 in schliessendem Sinne beeinflusst wird.

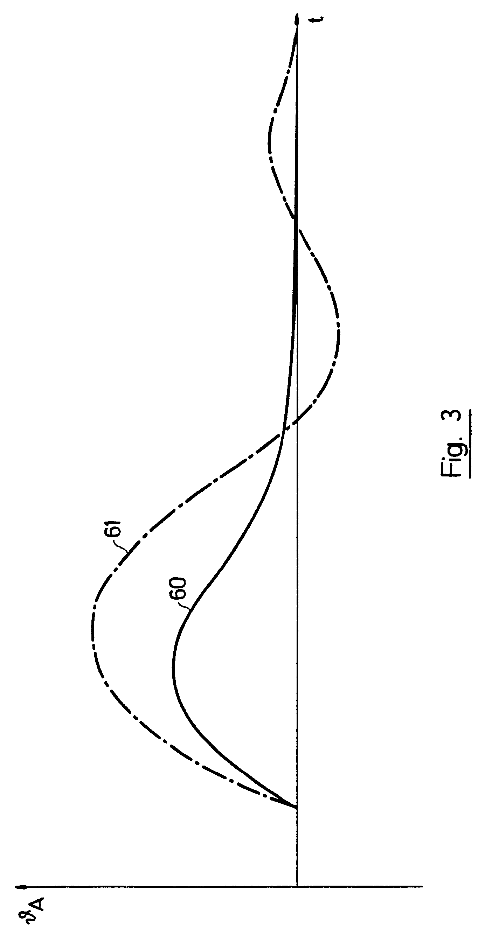

Der beschriebene Regelablauf hat zur Folge, dass sich die Austrittstemperatur $\vartheta_A$ entsprechend dem Verlauf der Kurve 60 in Fig. 3 verändert. Diese Fig. zeigt im Vergleich dazu als Kurve 61 den Verlauf der Austrittstemperatur in einer Anlage ohne Verwendung der Einrichtung 30. Aus dem Vergleich der beiden Kurven ergibt sich also, dass die Änderung der Austrittstemperatur in der Anlage nach Fig. 1 geringer ist und früher wieder ihren Sollwert erreicht als beim Stand der Technik.

Das Vergleichorgan 31, das z. B. PI-Charakter aufweist, ist zweckmässig als Beobachter ausgebildet.

Das Ausführungsbeispiel nach der Fig. 2 enthält eine Regelstrecke 50 mit einem als Heisswasserkessel arbeitenden Wärmeübertrager 51, der über eine mit einer Zirkulationspumpe 58 versehenen Zufuhrleitung 52 und eine Abfuhrleitung 53 an einem nicht gezeigten Wärmeverbraucher angeschlossen ist. Von der Abfuhrleitung 53 führt eine Verbindungsleitung 54 zur Zufuhrleitung 52. Die Verbindungsleitung 44 mündet stromoberhalb der Pumpe 58, so dass das Heisswasser von der Abfuhrleitung 53 zur Zufuhrleitung 52 strömt, also zur Strömungsrichtung im Wärmeübertrager 51 entgegengesetzt. Die Zirkulationspumpe 58 fördert das Wasser aus der Zufuhrleitung 52 durch den Wärmeübertrager 51 in die Abfuhrleitung 53. Ferner enthält die Zufuhrleitung 52 stromoberhalb der Anschlussstelle der Verbindungsleitung 54 ein erstes steuerbares Drosselorgan 55 in Form eines elektromotorisch angetriebenen Ventils, und stromoberhalb davon ist an die Leitung 52 ein Druckspeicher 57 zum Ausgleich von Druckschwankungen angeschlossen. Die Verbindungsleitung 54 enthält ein zweites steuerbares Drosselorgan 56, das wiederum ein Ventil mit elektromotorischem Antrieb ist. Dem Wärmeübertrager 51 wird auf beliebige, bekannte Weise eine Wärmemenge $Q_2$ zugeführt.

Der Regelkreis 20 ist in diesem Ausführungsbeispiel im wesentlichen gleich wie im Beispiel nach Fig. 1, abgesehen davon, dass von der Signalleitung 22 eine Signalleitung 38 abzweigt, die das Ausgangssignal aus dem Durchflussmesser 21 auch dem Vergleichorgan 31 zuführt. Dadurch berücksichtigt das Vergleichorgan 31 zusätzlich zu den Ein und Austrittstemperaturen am Wärmeübertrager 51 auch die durch ihn fliessende Wassermenge. Diese zusätzliche Information vergrössert die Empfindlichkeit der Einrichtung im Vergleich zu der nach Fig 1 und ermöglicht unter Umständen noch schnellere Reaktion auf etwaige Störungen. In Heisswasseranlagen ist das Erfassen der durch den Wärmeübertrager 51 fliessenden Wassermenge besonders wichtig, weil bei eventueller Dampfbildung im Wärmeübertrager 51 die Wasserzirkulation erheblich gestört werden könnte.

Die Einrichtung 30 entspricht hinsichtlich der Temperaturfühler 33 und 35, der Sollwertsignalleitung 32, des Vergleichsorgans 31, der Ausgangssignalleitung 37, der Verzweigungsstelle 40 und der zum zweiten Drosselorgan 56 führenden Signalleitung 42 dem Ausführungsbeispiel nach Fig. 1. Abweichend von diesem ist jedoch bei Fig. 2, dass die von der Verzweigungsstelle 40 abgehende Signalleitung 41 zu einem P-Glied 43 führt, dessen Ausgang über eine Signalleitung 44 zu einer Vergleichsstelle 25 führt. An diese Vergleichsstelle ist ausserdem eine Signalleitung 24 angeschlossen, die ein Sollwertsignal zuführt. Ein an der Vergleichsstelle 25 gebildetes Differenzsignal wird über eine Signalleitung 26 der Vergleichsstelle 23 im Mengenregelkreis 20 zugeführt.

Die Wirkungsweise der Anlage nach Fig. 2 ist im Prinzip gleich wie die zu Fig. 1 beschriebene Wirkungsweise. Durch die zusätzlichen Elemente zwischen der Verzweigungsstelle 40 und der Vergleichsstelle 23 wird das Regelverfahren gegenüber Fig. 1 verfeinert und eine freie Wahl der fliessenden Wassermenge möglich. Est ist in beiden Ausführungsbeispielen möglich, den Regelkreis 20 hinter dem Wärmeübertrager 11 bzw. 51 unterzubringen. Bei dieser Lösung müsste aber ein zusätzliches Drosselorgan vorgesehen werden, um die Zufuhr des Mediums zum Wärmeübertrager 11 bzw. 51 unterbrechen zu können. Die Anordnung des ersten Drosselorgans 15 bzw. 55 stromoberhalb der Anschlußstelle der Verbindungsleitung 14 bzw. 54 an der Zufuhrleitung 12 bzw. 52 ermöglicht ein Absperren des Mediums zwecks Inspektions- und Reparaturarbeiten in den Anlagekomponenten stromunterhalb des Ventils 15 bzw. 55.

Die Drosselorgane 15 und 16 bzw. 55 und 56 können aus Sicherheitsgründen redundant, und zwar in Serie und/oder parallel geschaltet, ausgeführt werden.

Der Wärmeübertrager kann auch mehrstufig ausgeführt werden, zum Beispiel als ein Dampferzeuger mit Vorwärmer, Verdampfer und Überhitzer.

Ausser den in den Ausführungsbeispielen verwendeten Verfahrensgrössen - Temperatur und Menge des fliessenden Mediums - können auch andere Verfahrensgrössen gemessen bzw. gesteuert werden, wie z. B. Drücke des Mediums, Gehalt an fremden Bestandteilen (Verschmutzung) oder Phasenverteilung im Medium, und zwar auch kombiniert miteinander.

## Patentansprüche

1. Einrichtung zum Regeln einer Verfahrensgrösse eines strömenden Mediums, das eine Regelstrecke (10) eines ersten Regelkreises durchströmt, der einen in der Regelstrecke (10) angeordneten Wärmeübertrager (11), eine daran angeschlossene Mediumzufuhrleitung (12), eine am Wärmeübertrager (11) angeschlossene Mediumabfuhrleitung (13), eine - parallel zum Wärmeübertrager (11) - an die Mediumzufuhrleitung (12) und die Mediumabfuhrleitung (13) angeschlossene Verbindungsleitung (14), ein erstes, von mindestens einem Teil des den Wärmeübertrager (11) durchströmenden Mediums durchströmtes Drosselorgan (15) und ein zweites in der Verbindungsleitung (14) angeordnetes Drosselorgan (16) aufweist, wobei an der Regelstrecke (10) in dem Bereich, der von der Anschlußstelle der Verbindungsleitung (14) an der Mediumzufuhrleitung (12) über den Wärmeübertrager (11) bis zur Anschlußstelle der Verbindungsleitung (14) an der Mediumabfuhrleitung (13) reicht, mindestens zwei Messorgane (33, 35) für die Verfahrensgrösse vorgesehen sind, um mindestens zwei im Normalbetrieb unterschiedliche Messwerte der Verfahrensgrösse zu erhalten, und wobei ein Vergleichsorgan (31) vorgesehen ist, in dem ein Differenzsignal aus den von den Messorganen (33, 35) ermittelten Messwerten unter Berücksichtigung eines Sollwertes für die Verfahrensgrösse am Ausgang des Wärmeübertragers (11) gebildet wird, dadurch <u>gekennzeichnet</u>, dass die Einrichtung einen zweiten Regelkreis (20) aufweist, der aus einem an der Regelstrecke (10) angeschlossenen Messorgan (21) für eine zweite Verfahrensgrösse des den Wärmeübertrager (11) durchströmenden Mediums, einer mit dem Ausgang dieses Messorgans (21) verbundenen Vergleichsstelle (23), einem Regler (28), dessen Eingang mit dem Ausgang der Vergleichsstelle (23) verbunden ist, und dem ersten mit dem Ausgang des Reglers (28) verbundenen Drosselorgan (15) besteht, wobei das im Vergleichsorgan (31) gebildete Differenzsignal einerseits als Sollwert über eine Signalleitung (41) der Vergleichsstelle (23) des zweiten Regelkreises (20) und andererseits über eine Signalleitung (42) dem zweiten Drosselorgan (16) zugeführt wird.

2. Einrichtung nach Anspruch 1, dadurch gekennzeichnet, dass das Vergleichsorgan (31) PI-Charakter aufweist und dass in der zur Vergleichsstelle (23) des zweiten Regelkreises (20) führenden Signalleitung (41) ein P-Glied (43) angeordnet ist.

3. Einrichtung nach Anspruch 1 oder 2, dadurch gekennzeichnet, dass das Messorgan (21) für die zweite Verfahrensgrösse zusätzlich zu den Messorganen (33, 35) für die erste Verfahrensgrösse ausgangsseitig mit dem Vergleichsorgan (31) verbunden ist.

4. Einrichtung nach einem der Ansprüche 1 bis 3, dadurch gekennzeichnet, dass das erste Drosselorgan (15) stromoberhalb der Anschlußstelle der Verbindungsleitung (14) an der Mediumzufuhrleitung (12) angeordnet ist und dass in der Mediumzufuhrleitung (12) stromoberhalb des erster Drosselorgans (15) ein Druckspeicher (57) vorgesehen ist.

5. Einrichtung nach einem der Ansprüche 1 bis 4, dadurch gekennzeichnet, dass in der Mediumzufuhrleitung (12) zwischen der Anschlußstelle der Verbindungsleitung (14) und dem Wärmeübertrager (11) eine Pumpe (58) vorgesehen ist.

6. Einrichtung nach einem der Ansprüche 1 bis 4, dadurch gekennzeichnet, dass mindestens ein Messorgan (35) für die erste Verfahrensgrösse an der Mediumabfuhrleitung (13) stromunterhalb der Anschlußstelle der Verbindungsleitung (14) vorgesehen ist.

7. Einrichtung nach einem der Ansprüche 1 bis 4, dadurch gekennzeichnet, dass der Regler (28) im zweiten Regelkreis (20) PI-Charakter aufweist.

8. Einrichtung nach einem der Ansprüche 1 bis 7, dadurch gekennzeichnet, dass die erste Verfahrensgrösse die Temperatur des Mediums ist und die zweite Verfahrensgrösse die durch den Wärmeübertrager (11) strömende Menge des Mediums ist.

**Claims**

1. Apparatus for controlling a process variable of a flowing medium flowing through a control system (10) of a first control circuit comprising a heat exchanger (11) disposed in the control system (10), a medium supply line (12) connected thereto, a medium discharge line (13) connected to the heat exchanger (11), a connecting line (14) connected - parallel to the heat exchanger (11) - to the medium supply line (12) and the medium discharge line (13), a first throttle member (15) through which there flows at least part of the medium flowing through the heat exchanger (11) and a second throttle member (16) disposed in the connecting line (14), at least two measuring members (33, 35) for the process variable being provided at the control system (10) in the zone extending from the connection of the connecting line (14) to the medium supply line (12) via the heat exchanger (11) to the connection of the connecting line (14) to the medium discharge line (13), in order to give at least two different process variable measurements in normal operation, a comparison member (31) being provided in which a differential signal is formed at the outlet of the heat exchanger (11) from the measurements determined by the measuring members (33, 35), a set value for the process variable being taken into account, characterised in that the apparatus comprises a second control circuit (20) consisting of a measuring member (21) connected to the control system (10), such measuring member being intended for a second process variable of the medium flowing through the heat exchanger (11), a comparison station (23) connected to the output of said measuring member (21), a controller (28) whose input is connected to the output of the comparison station (23), and the first throttle member (15) connected to the output of the controller (28), the differential signal formed in the comparison member (31) being fed, on the one hand, as a set-value via a signal line (41) to the comparison station (23) of the second control circuit (20) and, on the other hand, via a signal line (42) to the second throttle member (16).

2. Apparatus according to claim 1, characterised in that the comparison member (31) has a PI characteristic and a P-member (43) is disposed in the signal line (41) leading to the comparison station (23) of the second control circuit (20).

3. Apparatus according to claim 1 or 2, characterised in that the measuring member (21) for the second process variable is connected on the output side, in addition to the measuring members (33, 35) for the first process variable, to the comparison member (31).

4. Apparatus according to any one of claims 1 to 3, characterised in that the first throttle member (15) is disposed upstream of the connection of the connecting line (14) to the medium supply line (12) and in that a pressure accumulator (57) is provided in the medium supply line (12) upstream of the first throttle member (15).

5. Apparatus according to any one of claims 1 to 4, characterised in that a pump (58) is provided in the medium supply line (12) between the connection of the connecting line (14) and the heat exchanger (11).

6. Apparatus according to any one of claims 1 to 4, characterised in that at least one measuring member (35) for the first process variable is provided on the medium discharge line (13) downstream of the connection of the connecting line (14).

7. Apparatus according to any one of claims 1 to 4, characterised in that the controller (28) in the second control circuit (20) has a PI characteristic.

8. Apparatus according to any one of claims 1 to 7, characterised in that the first process variable is the medium temperature and the second process variable is the amount of medium flowing through the heat exchanger (11).

**Revendications**

1. Dispositif de régulation d'une grandeur d'un processus d'un flux de fluide qui traverse un système réglé (10) d'un premier circuit de régulation qui est constitué d'un échangeur (11) de température disposé dans le système réglé (10), d'une conduite (12) d'alimentation en fluide qui y est raccordée, d'une conduite (13) d'échappement du fluide, raccordée à l'échangeur (11) de température, d'une conduite (14) de pontage reliée - parallèlement à l'échangeur (11) de température - aux conduites (12) d'alimentation en fluide et (13) d'échappement du fluide, d'un premier dispositif (15) d'étranglement traversé d'au moins une partie du fluide passant par l'échangeur (11) de température et d'un deuxième dispositif (16) d'étranglement placé dans la conduite (14) de pontage, le système réglé (10) étant doté d'au moins deux dispositifs (33, 35) de mesure, situés dans un secteur allant de l'embranchement de la conduite (14) de pontage sur la conduite (12) d'alimentation en fluide, en passant par l'échangeur (11) de température, jusqu'à l'embranchement de la conduite (14) de pontage sur la conduite (13) d'échappement du fluide, et destinés à relever la grandeur de processus, de façon à obtenir au moins deux valeurs de mesure qui, en fonctionnement normal, sont différentes, ce dispositif comportant ensuite un dispositif comparateur (31) qui fournit un signal différentiel obtenu à partir des valeurs de mesure données par les dispositifs (33, 35) de mesure et tenant compte d'une valeur de consigne de la grandeur de processus à la sortie de l'échangeur (11) de température, caractérisé par le fait que le dispositif comporte un deuxième circuit (20) de régulation qui est constitué d'un dispositif (21) de mesure raccordé au système réglé (10), destiné à relever une deuxième grandeur de processus du fluide traversant l'échangeur (11) de température, d'un dispositif comparateur (23) relié à la sortie du dispositif (21) de mesure, d'un régulateur (28) dont l'entrée est connectée à la sortie du dispositif comparateur (23), et du premier dispositif (15) d'étranglement relié à la sortie du régulateur (28), le signal différentiel fourni par le dispositif comparateur (31) étant transmis d'une part comme un signal de consigne au dispositif comparateur (23) du deuxième circuit (20) de régulation, par l'intermédiaire d'un conducteur (41) de signaux, et d'autre part au deuxième dispositif (16) d'étranglement, par l'intermédiaire d'un conducteur (42) de signaux.

2. Dispositif selon la revendication 1, caractérisé par le fait que le dispositif comparateur (31) est du type PI et qu'un dispositif P (43) est disposé sur le conducteur (41) de signaux relié au dispositif comparateur (23) du deuxième circuit (20) de régulation.

3. Dispositif selon la revendication 1 ou 2, caractérisé par le fait que la sortie du dispositif (21) de mesure de la deuxième grandeur de processus est reliée, en plus des dispositifs (33, 35) de mesure de la première donnée de procédé, au dispositif comparateur (31).

4. Dispositif selon une des revendications 1 à 3, caractérisé par le fait que le premier dispositif (15) d'étranglement est placé en amont de l'embranchement de la conduite (14) de pontage sur la conduite (12) d'alimentation en fluide, et qu'en amont du premier dispositif (15) d'étranglement, la conduite (12) d'alimentation en fluide comporte un vase accumulateur (57).

5. Dispositif selon une des revendications 1 à 4, caractérisé par le fait qu'une pompe (58) est prévue dans la conduite (12) d'alimentation en fluide, entre l'embranchement de la conduite (14) de pontage et l'échangeur (11) de température.

6. Dispositif selon une des revendications 1 à 4, caractérisé par le fait qu'au moins un dispositif (35) de mesure, destiné à déterminer la première grandeur de processus, est disposé sur la conduite (13) d'échappement du fluide en aval de l'embranchement de la conduite (14) de pontage.

7. Dispositif selon une des revendications 1 à 4, caractérisé par le fait que le régulateur (28) disposé dans le deuxième circuit (20) de régulation est du type PI.

8. Dispositif selon une des revendications 1 à 7, caractérisé par le fait que la première grandeur de processus est la température du fluide et que la deuxième donnée de procédé est le débit du fluide traversant l'échangeur (11) de température.

Fig. 1

Fig. 2

Fig. 3

EP 0 149 002 B1